**Europäisches Patentamt**

**European Patent Office**

**Office européen des brevets**

(19)

(11) Veröffentlichungsnummer : **0 371 320 B1**

(12)

# EUROPÄISCHE PATENTSCHRIFT

(45) Veröffentlichungstag der Patentschrift :
**13.05.92 Patentblatt 92/20**

(51) Int. Cl.$^5$ : **B65G 69/00**

(21) Anmeldenummer : **89121121.1**

(22) Anmeldetag : **15.11.89**

(54) **Verformbare Dichtung des Spaltes zwischen dem Rand einer Gebäudeöffnung und dem Heck eines an diese herangefahrenenFahrzeugs.**

(30) Priorität : **28.11.88 DE 3840061**

(43) Veröffentlichungstag der Anmeldung :
**06.06.90 Patentblatt 90/23**

(45) Bekanntmachung des Hinweises auf die
Patenterteilung :
**13.05.92 Patentblatt 92/20**

(84) Benannte Vertragsstaaten :
**AT BE CH DE ES FR GB GR IT LI LU NL SE**

(56) Entgegenhaltungen :
**EP-A- 0 258 778**
**DE-A- 2 927 233**
**US-A- 3 653 173**

(73) Patentinhaber : **Alten, Kurt**
**Ringstrasse 14**
**W-3015 Wennigsen (DE)**

(72) Erfinder : **Alten, Kurt**
**Ringstrasse 14**
**W-3015 Wennigsen (DE)**

(74) Vertreter : **Depmeyer, Lothar**
**Auf der Höchte 30**
**W-3008 Garbsen 1 (DE)**

## Beschreibung

Die Erfindung geht aus von einer Dichtung nach dem Oberbegriff des 1. Patentanspruches (EP-A-0258778).

Bei den bekannten Dichtungen dieser Ausbildung bestehen die Tragarme aus einer dünnen Blattfeder; sie ist in der Lage, die seitlichen Schürzenabschnitte zu tragen und zudem einer Eindrückbewegung willig zu folgen. Unter bestimmten Bedingungen sind diese Tragarme jedoch nachteilig; werden nämlich an die Dichtung bestimmte Anhänger oder ggfs. auch Container herangefahren, die beim späteren Entfernen zur Vereinigung mit dem Transport- oder Zugfahrzeug angehoben werden müssen, so besteht die Gefahr einer Beschädigung, weil diese Tragarme in senkrechter Richtung nicht oder nur unzureichend verformbar sind.

Der Erfindung liegt die Aufgabe zugrunde, die eingangs erwähnten Dichtungen so auszubilden, dass sich das Fahrzeug bzw. deren Teile in senkrechter Richtung bewegen können, ohne eine Beschädigung der seitlich angeordneten Schürzenabschnitte bzw. ihrer Tragarme befürcheten zu müssen.

Zur Lösung dieser Aufgabe sind erfindungsgemäss Tragarme vorgesehen, die aus einer Vielzahl in Gummi od. dgl. eingebetteter, etwa quer zu den Schürzenabschnitten verlaufender, übereinander angeordneter Drahtseile in Parallelstellung bestehen. Diese Drahtseile können in die Schürzenabschnitte eingebettet sein, vorzugsweise werden sie jedoch in plattenförmige Gummikörper eingebettet, die mit den Schürzenabschnitten fest verbunden werden. Die so ausgeführten Tragarme verfügen über eine ausreichende Tragkraft, sie sind aber zudem in der Lage, unter der Einwirkung senkrechter Kräfte, insb. solcher Kräfte, die von unten nach oben wirken, elastisch nachzugeben.

Zweckmässigerweise werden die Drahtseile in zwei Ebenen hintereinander angeordnet, wozu man zwei plattenförmige Körper mit eingebetteten Drahtseilen benutzen kann, die mit dem Schürzenabschnitt z.B. Niete verbunden werden.

Werden für die Tragarme die oben erwähnten plattenförmigen Körper zur Einbettung benutzt, so werden diese mit Vorteil auf der Rückseite der Schürzenabschnitte befestigt, um Vorsprünge und Verdickungen der Schürzenabschnitte an der Vorderseite dieser Abschnitte auszuschliessen.

Weitere Einzelheiten der Erfindung werden anhand der Zeichnung erläutert, in der ein Ausführungsbeispiel der Erfindung dargestellt ist.

Es zeigen :

Fig. 1 eine Dichtung nach dem Oberbegriff des 1. Patentanspruches in der Teilansicht,

Fig. 2 einen schnitt nach der Linie II - II von Fig. 1,

Fig. 3 eine Einzelheit aus Fig. 1 in der Ansicht unter Fortlassung des sich quer erstreckenden Schürzenabschnittes und

Fig. 4 einen Schnitt nach der Linie IV - IV von Fig. 3.

Ein Gebäude 1 hat eine Öffnung 2, an die Fahrzeuge oder von ihnen zu transportierende Behälter od. dgl. mit dem Heck zum Be- und Entladen herangefahren werden können. Die Öffnung 2 ist von einem u-förmigen Rahmen 3 umschlossen, der fest mit dem Gebäude 1 verbunden ist und einen waagerechten, oberhalb der Öffnung 2 befindlichen Steg 4 und zu beiden Seiten der Öffnung 2 befindliche Schenkel 5 hat. an den Schenkein 5 sind Lenker 6 angelenkt, die mit ihrem freien Ende mit den senkrechten Schenkein 7 aus U-Eisen eines ebenfalls u-förmigen, steifen Rahmens 8 mit einem waagerechten Steg 9 verbunden sind. Die Rahmen 3, 8 stimmen bezüglich ihrer Grösse überein; der Rahmen 8 kann sich aufgrund der Lenker 6, die auch längenveränderbar sein können, in Richtung auf das Gebäude 1 bewegen, wenn eine Beaufschlagung durch ein Fahrzeug erfolgt.

An dem Steg 9 und den beiden Schenkeln 7 ist eine biegsame, dauerhafte, abriebfeste, folienartige Schürze befestigt, die sich der Gestalt des Fahrzeuges anpassen kann. Diese Schürze besteht aus zwei seitlichen Schürzenabschnitten in Form von zwei senkrechten Streifen 1o und einem oberen Schürzenabschnitt in Form eines oberen, waagerechet verlaufenden Streifens 11. Die Streifen 1o enden im Abstand vom Steg 9 überdeckt vom Streifen 11, sind aber auf ihrer gesamten Länge seitlich aussen mit den Schenkeln 7 verbunden. Der Streifen 11 steht mit dem oberen Rand mit dem Steg 9 in fester Verbindung. Im übrigen hängt er frei herab.

Die beiden Rahmen 3, 8 sind durch einen Bespannstoff verbunden. Dessen Seitenteile sind mit 13 bezeichnet; der obere, als Dach wirkende Abschnitt 13A verbindet die Stege 4 und 9 miteinander.

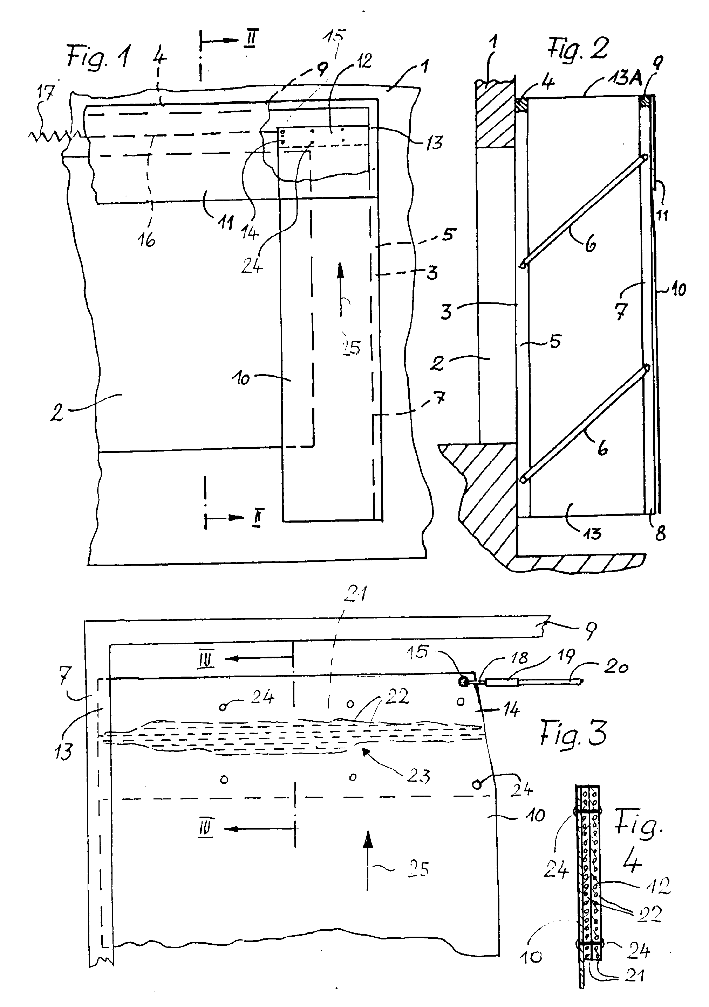

Der obere Rand der Streifen 1o ist mit einem waagerechten Tragarm 12 fest verbunden, der sich über die gesamte Breite der Streifen 1o erstreckt und bei 13 fest mit den Schenkeln 17 z.B. durch Verklemmen in Verbindung steht. Am freien Ende 14 des Tragarmes 12 in der oberen Ecke der Streifen 1o greift über ein Auge 15 ein Seilzug 16 mit zwischengeschalteter Zugfeder 17 an. Demgemäss sind die freien Enden der beiden Tragarme 12 elastisch nachgiebig miteinander verbunden. Gemäss Fig. 3 kann der Seilzug 16 mit Zugfeder 17 durch ein Anschlusstück 18 mit Klemme 19 und sich anschliessender Gummizugfeder 2o ersetzt sein.

Der Tragarm 12 wird gemäss Fig. 4 aus zwei aufeinanderliegenden Platten 21 aus Gummi od. dgl. gebildet, die übereinander liegende, eingebettete, etwa waagerecht verlaufende, dünne, biegsame Stahlseile 22 enthalten, die in Fig. 3 bei 23 angedeutet sind. Die Stahlseile 22 sind vorzugsweise mit dem Gummi haftend verbunden. Die Stahlseile 22 sind somit sowohl im Hinblick auf die hintereinander angeordneten als auch im Hinblick auf die übereinander angeordneten Seile mit gegenseitigem Abstand angeordnet.

Die beiden Platten 21 werden untereinander und mit dem oberen Rand der Streifen 1o durch mehrere,sie durchsetzende Niete 24 verbunden, die auch durch Klebung ersetzt werden können.

Die so ausgeführten Tragarme 12 sorgen für die faltenfreie Halterung der Streifen 1o, sie können aber auch elastisch verformt werden, wenn die Dichtung durch ein Fahrzeug beaufschlagt ist und das Fahrzeug senkrechte Hubbewegungen in Richtung des Pfeiles 25 ausführt.

Es sei erwähnt, dass es zweckmässig ist, die beiden Platten 21 gemäss Fig. 4 hinter den Streifen 1o anzuordnen, um einen Absatz an der Vorderseite der Streifen 1o auszuschliessen.


## Patentansprüche

1. Verformbare Dichtung des Spaltes zwischen dem Rand einer Gebäudeöffnung (2) und dem Heck eines an diese herangefahrenen Fahrzeuges, Containers od. dgl. mit einer Schürze, die seitlich und oben an einem im Abstand von dem Gebäude befindlichen und vorzugsweise auch in Richtung auf das Gebäude bewegbaren, unten offenen, u-förmigen Rahmen (8) befestigt ist, wobei die beiden senkrechten Schenkel (7) des Rahmens (8) zur Halterung der seitlichen Schürzenabschnitte (10) und der waagerechte, oben liegende Steg (9) dieses Rahmens (8) zur Halterung des oberen, sich quer erstreckenden Schürzenabschnittes (11) dient und wobei das obere Ende der seitlichen Schürzenabschnitte (10) mit einem biegsamen Tragarm (12) verbunden ist, der sich etwa über die Breite der seitlichen Schürzenabschnitte (10) erstreckt und mit Abstand vom Steg (9) des Rahmens (8) an dessen Schenkeln (7) befestigt ist , dadurch gekennzeichnet, dass der Tragarm (12) aus einer Vielzahl biegsamer, im wesentlichen quer zu den Schenkeln (7) verlaufender, einander zumindest in etwa paralleler, übereinander angeordneter, in einen plattenförmigen Körper aus Gummi od. dgl. eingebetteter Stahlseile (22) besteht.

2. Dichtung nach Anspruch 1, dadurch gekennzeichnet, dass die Stahlseile (22) festhaftend eingebettet sind.

3. Dichtung nach Anspruch 1, dadurch gekennzeichnet, dass die Stahlseile (22) zumindest in etwa in einer Ebene angeordnet sind.

4. Dichtung nach Anspruch 1 und 3, dadurch gekennzeichnet, dass die Stahlseile (22) in zwei einander parallelen Ebene angeordnet sind.

5. Dichtung nach Anspruch 3 und 4, dadurch gekennzeichnet, dass die Stahlseile (22) ,die in einer Ebene liegen, in einer aus Gummi od. dgl. bestehenden Platte (21) angeordnet sind, und dass bei zwei oder mehreren Ebenen entsprechende Platten fest miteinander verbunden sind.

6. Dichtung nach Anspruch 1 und 5, dadurch gekennzeichnet, dass der Schürzenabschnitt (10) mit den Platten (21) mittels die Platten und den Schürzenabschnitt durchsetzende Nieten, Schrauben od. dgl. verbunden sind.

7. Dichtung nach Anspruch 1, dadurch gekennzeichnet, dass die plattenförmigen Körper (21) auf der Rückseite der Schürzenabschnitte (10) befestigt sind.

8. Dichtung nach Anspruch 3, dadurch gekennzeichnet, dass bei zwei oder mehreren Ebenen die Stahlseile (22), die übereinander und hintereinander benachbart liegen mit gegenseitigem Abstand eingebettet sind.


## Claims

1. Deformable seal for sealing the gap between the edge of an opening (2) in a building and the rear of a vehicle, container or the like which has been reversed up to said opening, the seal comprising an apron, which is mounted at its lateral edges and upper end on a U-shaped frame (8), which is situated at a spacing from the building, is also preferably displaceable in the direction towards the building and is open at its lower end, the two vertical arms (7) of the frame (8) serving to support the lateral apron portions (10), and the horizontal crosspiece member (9) situated at the upper end of this frame (8) serving to support the upper, transversely extending apron portion (11), and the upper end of the lateral apron portions (10) being connected to a flexible supporting arm (12), which extends substantially over the width of the lateral apron portions (10) and is mounted on the arms (7) of the frame (8) at a spacing from the cross-piece member (9) of said frame, characterised in that the supporting arm (12) comprises a plurality of flexible steel cables (22), which extend substantially at right angles to the arms (7), are at least substantially parallel to one another, are disposed one above the other and are embedded in a plate-like body formed from rubber or the like.

2. Seal according to claim 1, characterised in that the steel cables (22) are embedded in a firmly adherent manner.

3. Seal according to claim 1, characterised in that the steel cables (22) are disposed in at least one plane.

4. Seal according to claims 1 and 3, characterised in that the steel cables (22) are disposed in two planes which are parallel to each other.

5. Seal according to claims 3 and 4, characterised in that the steel cables (22), which lie in one plane, are disposed in a plate (21), which is formed from rubber or the like, and in that, where two or more planes are involved, corresponding plates are firmly interconnected.

6. Seal according to claims 1 and 5, characterised in that the apron portion (10) is connected to the plates (21) by means of rivets, screws or the like, which extend through the plates and the apron portion.

7. Seal according to claim 1, characterised in that the plate-like bodies (21) are mounted on the rear surface of the apron portions (10).

8. Seal according to claim 3, characterised in that, when two or more planes are involved, the steel cables (22), which lie adjacent one another, above one another and behind one another, are embedded with mutual spacings therebetween.


**Revendications**

1. Dispositif déformable pour rendre étanche l'intervalle entre le bord d'une baie de bâtiment (2) et l'arrière d'un véhicule automobile, d'un conteneur ou analogue qui en est rapproché, comprenant une jupe fixée, latéralement et en haut, à un cadre (8) en forme de U, ouvert vers le bas, se trouvant à distance du bâtiment et, de préférence, susceptible d'être déplacé en direction du bâtiment, les deux jambages (7) verticaux du cadre (8) servant à maintenir les parties latérales (10) de la jupe et l'âme (9) horizontale en haut de ce cadre (8) à maintenir la partie (11), supérieure et s'étendant transversalement, de la jupe, l'extrémité supérieure des parties latérales (10) de la jupe étant reliée à un bras-support (12) souple, qui s'étend à peu près sur la largeur des parties latérales (10) de la jupe et qui est fixée à distance de l'âme (9) du cadre (8) aux jambages (7) de celui-ci, caractérisé en ce que le bras-support (12) est constitué d'une multiplicité de câbles d'acier (22), qui s'étendent sensiblement transversalement aux jambages (7), qui sont disposés les uns au-dessus des autres, en étant au moins approximativement parallèles, et qui sont incorporés dans un corps en forme de plaque, en caoutchouc ou analogue.

2. Dispositif suivant la revendication 1, caractérisé en ce que les câbles d'acier (22) sont incorporés avec adhérence.

3. Dispositif suivant la revendication 1, caractérisé en ce que les câbles d'acier (22) sont disposés au moins approximativement dans un plan.

4. Dispositif suivant la revendication 1 ou 3, caractérisé en ce que les câbles d'acier (22) sont disposés dans deux plans parallèles.

5. Dispositif suivant la revendication 1 ou 4, caractérisé en ce que les câbles d'acier (22), qui sont dans un plan, sont disposés dans une plaque (21) en caoutchouc ou analogue, et en ce que, dans le cas de deux ou de plusieurs plans, les plaques correspondantes sont reliées rigidement les unes aux autres.

6. Dispositif suivant la revendication 1 ou 5, caractérisé en ce que la partie (10) de la jupe est reliée aux plaques (21) au moyen de rivets, de vis ou analogues traversant les plaques et la partie de la jupe.

7. Dispositif suivant la revendication 1, caractérisé en ce que les corps (21) en forme de plaques sont fixés sur le côté arrière des parties (10) de la jupe.

8. Dispositif suivant la revendication 3, caractérisé en ce que, dans le cas de deux ou de plusieurs plans, les câbles d'acier (22) qui sont voisins, en étant superposés et en étant l'un derrière l'autre, sont incorporés à distance mutuelle.

Fig. 1

Fig. 2

Fig. 3

Fig. 4